# EUROPÄISCHE PATENTSCHRIFT

(11) **EP 3 303 107 B1**
(45) Veröffentlichungstag und Bekanntmachung des Hinweises auf die Patenterteilung: **10.11.2021**
(21) Anmeldenummer: 16734200.5
(22) Anmeldetag: 05.06.2016
(51) Int. Cl.: B62D 57/024, B62D 57/032

(54) **FAHRWERK MIT LINEAR- UND SCHWENKBEWEGUNGEN**
CHASSIS WITH LINEAR AND SWIVELING MOVEMENTS
CHÂSSIS À MOUVEMENTS LINÉAIRES ET PIVOTANTS

(30) Priorität: 05.06.2015 CH 8112015
(43) Veröffentlichungstag der Anmeldung: 11.04.2018
(73) Patentinhaber: Luzerner Werte Holding AG, 6004 Luzern (CH)
(72) Erfinder: NIEDERBERGER, Anton, 6370 Oberdorf (NW) (CH)
(74) Vertreter: Weissfloh, Ingo
(86) Internationale Anmeldenummer: PCT/EP2016/062735
(87) Internationale Veröffentlichungsnummer: WO 2016/193488

(56) Entgegenhaltungen:
- EP-A2- 1 884 453
- EP-A2- 2 420 757
- WO-A1-2010/142044
- US-A- 5 890 553

## Beschreibung

### Technisches Gebiet

Die Erfindung betrifft ein Fahrwerk für einen Roboter zum Befahren für Vakuum- oder Magnethaftmodule geeigneter Flächen, wie beispielsweise Glasfassaden, Metallfassaden, Glasdächer oder Metallwände zum Zwecke einer Inspektion, Reinigung oder Wartung.

### Stand der Technik

Aus der gattungsbildenden DE 103 20 570 B4 ist ein selbstkletterndes Fahrwerk für Fassaden, insbesondere Glasfassaden, bekannt, welches einen Antrieb aus Endlosreihen steuerbarer Sauger aufweist. Die Sauger laufen in der Fahrfläche des Fahrwerks auf zwei jeweils in sich geschlossenen und mechanisch miteinander verbundenen Bahnführungen um, wobei die Saugseiten der Sauger stets zur Fahrfläche weisen. Hierzu sind die Sauger untereinander mit einem Triebmittel, wie eine Kette oder ein Zahnriemen, welcher motorisch angetrieben wird, in einem festen Abstand zueinander verbunden. Die Zugmittel sorgen für einen synchronen Umlauf aller Sauger je Bahnführung. Eine pneumatische Saugersteuerung ist für einen einheitlichen Hub der Sauger ausgelegt. Das Fahrwerk ist infolge des Umlaufs der Sauger in der Fahrfläche vorteilhaft flach, wodurch sich sein Schwerpunkt nahe der Fahrfläche befindet, was einem Abkippen von einer z. B. vertikalen Wand vermeiden hilft. Weiterhin ist es sehr gut lenkbar und ermöglicht es, kleinere Hindernisse, wie Glasprofilstäbe oder Befestigungslaschen, zu überwinden.

Weiterhin ist in der WO 2010/142044 A1 ein Fahrwerk bekannt, bei dem an einem relativ zueinander beweglichen Hauptrahmen und Hilfsrahmen, die jeweils über eine Translationsbewegungseinheit für eine Linearbewegung verbunden und durch eine Schwenkeinheit für eine Schwenkbewegung relativ zueinander um eine Rotationsachse drehbar sind, jeweils eine Gruppe Saugeinheiten zum vorübergehenden Befestigen des Hauptrahmens bzw. des Hilfsrahmens an einer nicht horizontalen Oberfläche vorhanden ist, wobei die Saugeinheiten an teleskopartig in der Länge veränderbaren Beinen angeordnet sind und bei einer Bewegung des Hauptrahmens und des Hilfsrahmens nur alle Saugeinheiten der jeweiligen Gruppe des Hauptrahmens und des Hilfsrahmens gleichzeitig bewegt werden. Für die Linearbewegung des Hauptrahmens und des Hilfsrahmens ist nur ein zentraler Antrieb vorhanden, ein individueller Antrieb für die Linearbewegung einer Saugeinheit ist nicht vorhanden. Offenbart ist, dass alle Saugeinheiten einer Gruppe mittels eines Antriebes gleichzeitig angehoben und gesenkt werden. Ein einzelner Antrieb wurde dazu führen, dass Hauptrahmen und Hilfsrahmen sich schräg stellen würden und sich zudem verkanten könnten. Damit wird eine starre Konstruktion offenbart, welche keine flexible und kontinuierliche Bewegung ermöglicht und damit in der Anwendung ebenfalls unflexibel ist.

Nachteilig an dem Fahrwerk ist, dass sich stärker gewölbte Flächen nur bedingt befahren lassen, da infolge des einheitlich festgelegten Saugerhubes und festen Saugerabstandes Sauger entweder in der Luft hängen oder das Fahrwerk ausstemmen können. Eine Sensorik überwacht absturzgefährdende Zustände und bringt ggf. das Fahrwerk zum Stillstand. Die Fahrgeschwindigkeit ist infolge des zeitaufwändigen Befahrens der Umlenkpunkte recht gering und die Eigenmasse infolge seiner durchgängig pneumatischen Steuerung ist relativ hoch.

Bekannt ist weiterhin die EP 0 324 297 A1, welche ein Fahrwerk mit Vakuumhaftelementen beschreibt, bei welchem zwei vertikal zur Fahrfläche übereinander angeordnete Linearfahrwerke relativ zueinander drehbar miteinander verbunden sind und die Linearbewegung durch eine Verschiebung der Fahrwerke relativ zueinander erfolgt. Nachteilig ist die schwere und zudem unflexible Konstruktion welche einen flexiblen kontinuierlichen Betrieb nicht ermöglicht, da jeweils komplette Baugruppen verschoben werden.

Weiterhin beschreibt die US 5 890 553 A, welche die Merkmale des Oberbegriffs des Anspruchs 1 offenbart, ein Fahrwerk mit Vakuumhaftelementen, bei welchem ein Linearfahrwerk und ein Rotationsfahrwerk zueinander relativ drehbar und verschiebbar angeordnet sind. Nachteilig ist hierbei die starre Konstruktion der Fahrwerke, da alle Vakuumhaftelemente in Bewegungsrichtung unbeweglich an jeweils einer Rahmenkonstruktion angeordnet sind und die Bewegung nur durch ein abwechselndes Umsetzen der jeweiligen Fahrwerke erfolgt. Schließlich beschreibt die UK 2 299 063 ein Fahrwerk, welches aus einer verwindbaren und im Grundriss viereckigen Rahmenkonstruktion mit daran an den Längsaußenkanten angeordneten Haftelementen, welche sich senkrecht und parallel zur Fahrfläche verschieben lassen, besteht. Nachteilig hieran ist die unflexibel Anwendung insbesondere für eine flexible und kontinuierliche Bewegung.

Der Erfindung liegt die Aufgabe zugrunde, ein Fahrwerk für einen Roboter zu schaffen, das massearm ist, wenig störanfällig ist, einen kontinuierlichen Antrieb und hervorragende Lenkfähigkeit ermöglicht, kleinere Hindernisse und negative als auch positive Bodenwellen überwinden kann sowie eine akzeptable Fahrgeschwindigkeit entwickeln kann. Mit der Erfindung wird im angegebenen Anwendungsfall erreicht, dass ein Fahrwerk für einen Roboter, Manipulator, ein Fahrflächen-Reinigungsgerät und/oder für Überwachungsvorrichtungen zum Befahren von für mittels eines Vakuums oder elektromagnetischer Kraft beaufschlagbarer Haftmodule geeigneten Flächen mit stets zur Fahrfläche weisenden und bezüglich der Fahrfläche abheb- und absetzbaren Haftfüßen geschaffen wird, wobei die Haftmodule an einer zumindest zweiteiligen Grundkonstruktion angeordnet sind und dass eine Linearbewegung und eine Schwenkbewegung relativ zur Fahrfläche möglich ist, wobei die Grundkonstruktion aus zumindest zwei Grundplatten besteht, wobei die Grundplatten relativ zueinander motorisch angetrieben verdrehbar bzw. schwenkbar ausgeführt sind und die Haftmodule an den Grundplatten angeordnet sind, wobei die einzelnen Haftmodule jeweils eigene steuerbare Fahrantriebe und Hubantriebe besitzen.

Zudem wird ein Verfahren zum Betreiben des Fahrwerks für eine Linearbewegung und eine Schwenkbewegung relativ zur Fahrfläche geschaffen, wobei für eine Linearbewegung als Fahrbetrieb des Fahrwerks Haftfüße von hub- und fahrbaren Haftmodulen von einem ersten Teil der Grundkonstruktion jeweils auf der Fahrfläche haften und nach jeweils erfolgter Linearbewegung abgehoben und wieder abgesetzt werden und dass eine Linearbewegung der hub- und fahrbaren Haftmodule relativ zur Grundkonstruktion und zum Fahrwerk erfolgt, wobei das Abheben, Absetzen und Haften der hub- und fahrbaren Haftmodule gruppiert in zwei, drei oder mehr Gruppen zeitlich und räumlich versetzt erfolgt, wobei die Anzahl der Gruppen und die Anzahl und Zuordnung der hub- und fahrbaren Haftmodule in und zu den Gruppen variabel und individuell erfolgt und dass für eine Schwenkbewegung zur Richtungsänderung Haftfüße von hub- und/oder fahrbaren Haftmodulen eines weiteren Teils der Grundkonstruktion auf die Fahrfläche abgesetzt werden und haften und die Schwenkbewegung der Teile der Grundkonstruktion relativ zueinander erfolgt und danach die hub- und/oder fahrbaren Haftmodule des weiteren Teils der Grundkonstruktion wieder abgehoben werden, wobei während der Schwenkbewegung die Haftfüße der hub- und fahrbaren Haftmodule des ersten Teils der Grundkonstruktion nicht auf der Fahrfläche haften und nach der Schwenkbewegung die Haftfüße der hub- und fahrbaren Haftmodule des ersten Teils der Grundkonstruktion wieder auf der Fahrfläche haften.

Indem alle Haftmodule sowohl was ihre Bewegung entlang ihrer Bahnführungen als auch ihren Hub betrifft individuell einzeln und stufenlos automatisch ansteuerbar sind, ergeben sich vielfältige Vorteile für das Fahrwerk und einen mit dem Fahrwerk realisierten Roboter im Betrieb. Das Fahrwerk ist besonders massearm, wenig störanfällig, besitzt eine ausgezeichnete fließende sowie kontinuierliche Antriebsfähigkeit und Lenkfähigkeit, ist relativ schnell und ist in der Lage, kleinere Hindernisse und stärkere Bodenwellen oder Absätze zu überklettern.

Vorteilhafte Ausgestaltungen der Erfindung sind für das Fahrwerk in den Ansprüchen 2 bis 9 und für das Verfahren in den Ansprüchen 11 bis 16 dargestellt.

Vorteilhaft sind die Grundplatten als innere Grundplatte und als äußere Grundplatte ausgeführt, wobei die Haftmodule an der inneren Grundplatte oder der äußeren Grundplatte jeweils eigene steuerbare Hub- und Fahrantriebe besitzen und die Haftmodule der jeweils dazu äußeren Grundplatte oder inneren Grundplatte jeweils eigene steuerbare Hubantriebe besitzen. Hierdurch wird erreicht, dass sowohl die Fortbewegung als auch die Schwenkbewegung für eine Richtungsänderung zuverlässig und störungsfrei erfolgen kann und dass das Fahrwerk einen sicheren Halt für alle Bewegungen und Bewegungszustände an der Fahrfläche erlangt und dass die Bewegungsabläufe und Richtungsänderungen ohne gegenseitige Beeinflussung und Behinderung erfolgen können.

Indem vorteilhaft der Fahrantrieb der Haftmodule ein Linearantrieb ist, lassen sich die jeweiligen Fahrbewegungen zuverlässig, stabil und gezielt steuern und ausführen. Der Geradeauslauf lässt sich stabilisieren und lässt sich zudem konstruktiv mit geringem Aufwand umsetzen, was zudem das Gewicht des Fahrwerks weiter verringert.

Weiterhin weisen die jeweils hub- und fahrbaren Haftmodule einen von einem moduleigenen Elektromotor antreibbaren kombinierten Hub- und Fahrantrieb auf, wodurch die Konstruktion durch Komponentenminimierung vereinfacht und zudem weiter das Gewicht reduziert wird.

Bei einer vorteilhaften Weiterbildung ist die Umschaltung von Hub- auf Fahrbetrieb für jedes einzelne jeweils hub- und fahrbare Haftmodul automatisch steuerbar ausgeführt, so dass ein kontinuierlicher bzw. fließender Bewegungsablauf des Antriebes verbessert wird. Das typische Ruckeln derartiger Fahrwerke wird reduziert, wodurch auch die Haftung und Lagesicherheit an der Fahrfläche verbessert wird, da das mit einem Ruckeln einhergehenden Losbrech- bzw. Losreißmoment der Haftfüße von der Fläche minmiert bzw. vermieden wird.

Vorteilhaft sind für den Fahrbetrieb die jeweils hub- und fahrbaren Haftmodule auf der jeweiligen Grundplatte an parallel zueinander und seitlich dazu regelmäßig und/oder unregelmäßig versetzt und/oder in Längsrichtung wiederholend nacheinander angeordneten Bahnführungen angeordnet, welche über die Fläche der jeweiligen Grundplatte günstige Haftungseigenschaften während der Linearbewegung ermöglichen. Durch die versetzte Anordnung ist es möglich, dass zu jedem Zeitpunkt der Linearbewegung mindestens die Hälfte aller Haftfüße der hub- und fahrbaren Haftmodule auf der Fahrfläche haften und somit ein sichere Lage auch an schwierigen Verhältnissen der Fahrfläche erreicht werden und zudem die kontinuierliche Linearbewegung aufrechterhalten bleibt, da versetzt und aufeinander folgend jeweils immer wieder Haftfüße auf der Fahrfläche aufsetzen und haften sowie Haftfüße sich von dieser lösen und abheben.

Bei einer Weiterbildung umfassen die Bahnführungen Führungsschienen, welche eine verkantungsfreie, kippelfreie und verwindungsfreie Bewegung und Lage der hub- und fahrbaren Haftmodule an der jeweiligen Grundplatte verbessern.

Vorteilhaft ist das Fahrwerk fernsteuerbar ausgeführt, wodurch ein Einsatz auch an Fahrflächen erfolgen kann, welche nicht direkt bzw. nicht problemlos erreichbar sind und von einer zentralen Stelle auch bedient werden können.

Vorteilhaft erfährt das Verfahren eine Weiterbildung, indem vor, während oder nach der Schwenkbewegung der Grundplatten zur Richtungsänderung eine Linearbewegung des Fahrwerks durch die hub- und/oder fahrbaren Haftmodule des weiteren Teils der Grundkonstruktion erfolgt. Somit wird das Verfahren weiter optimiert, da die Richtungsänderung schneller erfolgt und zudem eine Wegoptimierung erfolgt.

Vorteilhaft haften beim Übergang von Linearbewegung zu Schwenkbewegung sowie von Schwenkbewegung zu Linearbewegung kurzzeitig zumindest ein Teil der Haftfüße der Haftmodule beider Teile der Grundkonstruktion auf der Fahrfläche. Somit wird vermieden, dass beim Wechsel der Bewegungsrichtung und beim Umschalten der Bewegungsart das Fahrwerk seine Lagesicherheit und Haftung an der Fahrfläche verliert. Zudem wird erreicht, dass in diesem, gegebenenfalls gezielt verlängerten Zustand eine verbesserte Haftung für beispielsweise Wartungsarbeiten erreicht wird.

Weiterhin erfolgt bei dem Verfahren vorteilhaft die Drehbewegung der Teile der Grundkonstruktion mittels eines elektromotorischen oder pneumatischen Antriebes. Hierdurch wird ein zuverlässiger und genauer Antrieb und zugleich eine Lagestabilisierung der zueinander beweglichen Teile der Grundkonstruktion erreicht.

Vorteilhaft werden die gruppierten hub- und fahrbaren Haftmodule nach der jeweiligen Linearbewegung als Fahrbetrieb mit abgehobenen Haftfüßen in eine entsprechende Ausgangsstellung zurückgefahren. Danach erfolgt an der Ausgangsstellung ein erneutes Absetzen der Haftfüße auf die Fahrfläche für einen erneuten Fahrbetrieb. Hierdurch wird eine besonders kontinuierliche Bewegung des Fahrwerks im Fahrbetrieb erreicht, da jeweils in geeigneter Weise gruppierte Haftmodule mit ihren Haftfüßen simultan überlappend bzw. versetzt die entsprechenden Bewegungsabläufe vollziehen und somit neben der kontinuierlichen Bewegung auch jeweils die erforderliche Haftung an der Fahrfläche gewährleisten.

Zudem erfolgt vorteilhaft der Hubbetrieb und/oder Fahrbetrieb kontinuierlich und fließend. Hierdurch erfolgt nicht nur der Fahrbetrieb kontinuierlich sondern auch die Hubbewegung erfolgt angepasst an die Fahrbewegung fließend, so dass ein ruckelfreier Bewegungsablauf erreicht wird. Hierdurch bewegt sich das Fahrwerk ruhiger und ist weniger anfällig gegen auftretende Krafteinflüsse von außen.

Indem die Bildung der Gruppen, also die Anzahl der Gruppen und die Anzahl und Zuordnung der hub- und fahrbaren Haftmodule in und zu den Gruppen variabel und individuell erfolgt, wird eine bedarfsgerechte Haftung an und auf der Fahrfläche erreicht. Hierbei bilden ein, zwei oder mehr Haftmodule jeweils eine Gruppe.

Vorteilhaft erfolgt die Ansteuerung der hub- und fahrbaren Haftmodule für die Linearbewegung individuell. Hierdurch wird eine bedarfsgerechte Beschleunigung und Geschwindigkeit der Fahrwerke auf der Fahrfläche erreicht. Zudem lassen sich durch eine gezielte Ansteuerung der Linearantriebe der hub- und fahrbaren Haftmodule auch Richtungsänderungen und Richtungsanpassungen sowie Richtungskorrekturen erreichen. Da die Haftfüße, die regelmäßig aus Gummi bestehen, einem Walken und einer seitlichen Verschiebung unterliegen, welche besonders an vertikalen Fahrflächen bei horizontaler oder schräger, also seitlicher Fahrt besonders auftreten, ist eine Richtungskorrektur stetig erforderlich. Diese wird erreicht, indem beispielsweise die Linearantriebe der jeweils nach unten weisenden Haftmodule eine schnellere Linearbewegung vollziehen als die jeweils nach oben weisenden Haftmodule. Zudem lassen sich dadurch auch gezielt geringe Richtungsänderungen vollziehen. Hierbei vollziehen jene Linearantriebe der hub-und fahrbaren Haftmodule, in welche eine Richtungsänderung stattfinden soll eine langsamere Linearbewegung als bei den jeweils anderen hub- und fahrbaren Haftmodulen.

Die Erfindung soll nachstehend anhand mehrerer Ausführungsbeispiele näher erläutert werden.

So zeigen:
- Fig. 1: ein Fahrwerk für einen Roboter, speziell zur Reinigung glatter, fester Oberflächen, in perspektivischer Ansicht von oben,
- Fig. 2: ein Fahrwerk in perspektivischer Ansicht von unten,
- Fig. 3: den prinzipiellen Aufbau einer Bahnführung für Haftmodule,
- Fig. 4: ein Haftmodul von seiner Innenseite her in perspektivischer Ansicht,
- Fig. 5: ein Haftmodul von seiner Außenseite her in perspektivischer Ansicht,
- Fig. 6: ein Fahrwerk in der Ansicht von unten
- Fig. 7: ein Fahrwerk als Reinigungsroboter mit Reinigungsbürste in der Draufsicht,
- Fig. 8: ein Fahrwerk als Reinigungsroboter mit Reinigungsbürste in einer Seitenansicht,
- Fig. 9: ein Fahrwerk als Reinigungsroboter mit Reinigungsbürste mit Blick auf die Reinigungsbürste von hinten,
- Fig. 10: ein Fahrwerk als Reinigungsroboter mit Reinigungsbürste in perspektivischer Ansicht von oben,
- Fig. 11: eine schematische Darstellung einer Grundkonstruktion umfassend zwei Grundplatten mit Haftfüßen und Antrieb für Zahnkranz in perspektivischer Ansicht von oben und
- Fig. 12: eine schematische Darstellung einer Grundkonstruktion umfassend zwei Grundplatten mit Haftfüßen und Antrieb für Zahnkranz in perspektivischer Ansicht von unten

### Ausführung der Erfindung

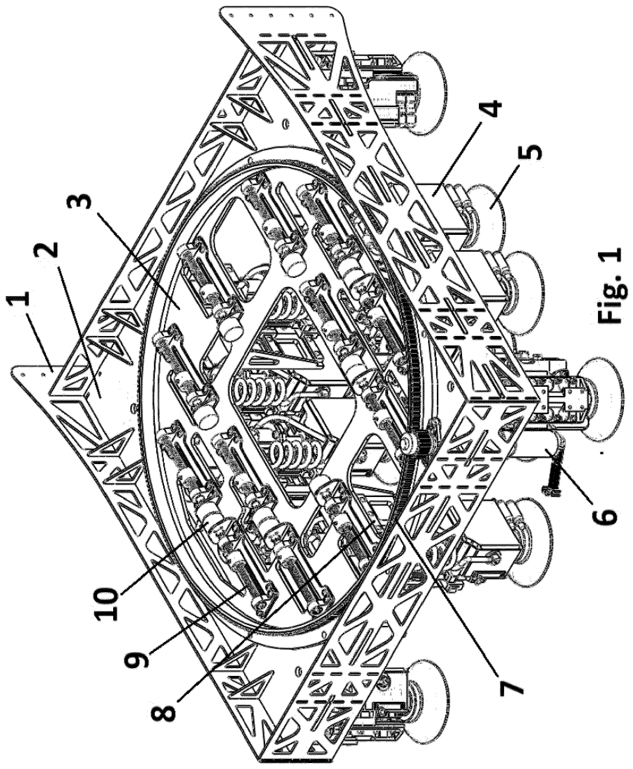

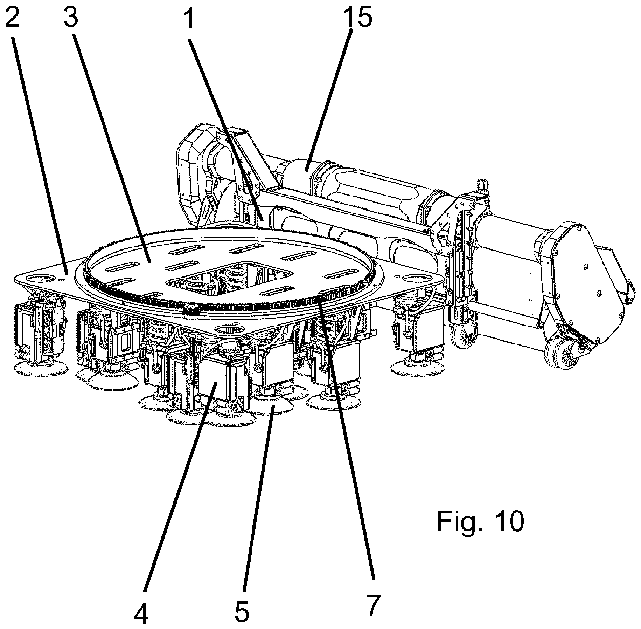

Ein gemäß Fig. 1 sowie Fig. 10 gezeigter Roboter ist zum Beispiel geeignet, um Glasfassaden oder andere feste, glatte, gewölbte Oberflächen von Bauwerken zu reinigen. Hierzu kann sein Fahrwerk 1 ein Reinigungsgerät, eine Inspektionskamera oder einen fernsteuerbaren Manipulator für Wartungs- und Reparaturaufgaben tragen.

In einem konkreten Ausführungsbeispiel sind parallel zu einer Fahrfläche des Roboters im Fahrwerk 1 zwei Grundplatten 2, 3 angeordnet, welche sich über einen Elektromotor 6 betriebenen Zahnkranz 7 drehend und damit schwenkbar zueinander bewegen können. Die äußere Grundplatte 2 ist in diesem konkreten Ausführungsbeispiel direkt mit dem Fahrwerk 1 verbunden. In den Ecken der äußeren Grundplatte 2 sind in dem konkreten Ausführungsbeispiel Haftmodule 4 mit Hubantrieb 16 befestigt. Die an den Haftmodulen 4 befestigten Haftfüße 5 weisen stets zur Fahrfläche.

### An der inneren Grundplatte 3 des konkreten

Ausführungsbeispiels sind Laufbahnen 8 für weitere Haftmodule 4 als hub- und fahrbare Haftmodule 4 angebracht. Die hub- und fahrbaren Haftmodule 4 werden mit Hilfe von Linearantrieben 9 in Form von Spindeln 9, welche mit einem Elektromotor 10 angetrieben werden, entlang der linearen Laufbahn 8 bewegt. Die hub- und fahrbaren Haftmodule 4 können über ein elektropneumatisches System separat ein- und ausfahren. Da jedes Haftmodul 4 einzeln angesteuert werden kann, können sich diese unabhängig voneinander entlang der Laufbahn 8 und im eigenen Hub frei bewegen.

So lassen sich in einem nicht dargestellten konkreten Ausführungsbeispiel, die hub- und fahrbaren Haftmodule 4 von einem moduleigenen Elektromotor als kombinierten Hubantrieb 16 und Fahrantrieb 9 antreiben. Dadurch ist ein simultaner und fließender Bewegungsablauf der hub- und fahrbaren Haftmodule 4 möglich, wonach durch einen moduleigenen Elektromotor realisiert, am jeweiligen baulich bedingten Ende des Fahrantriebes 9 aus der Linearbewegung sofort in einen Hubbewegung übergegangen wird und zu Beginn einer jeder Fahrbewegung bzw. Linearbewegung von einem Ende aus die Hubbewegung zur Fahrbewegung bzw. Linearbewegung übergeht. Bei einer weiteren, nicht dargestellten Ausführung des Linearantriebes 9 der hub- und fahrbaren Haftmodule 4 werden diese mittels umlaufenden Zahnriemen oder mit Seilzügen angetrieben. Bei der Variante des Antriebs mittels Linearantriebes 9 läuft beispielsweise das entsprechende Zahnrad im Zwischenraum des Zahnriemens, wodurch die Kraftübertragung optimiert wird.

Bei der Linearbewegung des Fahrwerks 1 sind in dem konkreten Ausführungsbeispiel ausschließlich die hub- und fahrbaren Haftmodule 4 der inneren Grundplatte 3 in Anwendung.

Da sich die Haftmodule 4 frei bewegen können, ist es möglich, eine Schrittbewegung zu erzeugen. Ein Versetzen dieser Schrittbewegung der einzelnen Haftmodule 4 macht es möglich, eine gleichmäßige Linearbewegung zu erzeugen. Im ausgefahrenen Zustand können sich die Haftfüße 5 der Haftmodule 4 mit Hilfe eines Vakuums an den Oberflächen festhalten.

Beim Wechsel der Linear- in die Schwenkbewegung wird zunächst die äußere Grundplatte 2 mit Hilfe des mit einem Elektromotor 6 betriebenen Zahnkranzes 7 in die gewünschte Richtung gedreht. Sobald die gewünschte Position erreicht ist, fahren die Haftfüße 5 der Haftmodule 4 der äußeren Grundplatte 2 aus und befestigen sich an der Oberfläche. Die Haftmodule 4 der inneren Grundplatte 3 lösen sich und die gesamte Grundplatte 3 bewegt sich mit Hilfe des Elektromotor 6 betriebenen Zahnkranzes 7 in die gleiche Ausrichtung wie die äußere Grundplatte 2. Nun können sich die Haftfüße 5 der Haftmodule 4 der inneren Grundplatte 3 an der Oberfläche befestigen und die Haftfüße 5 der Haftmodule 4 der äußeren Grundplatte 2 können sich lösen. Das gesamte System ist nun wieder für die Linearbewegung bereit.

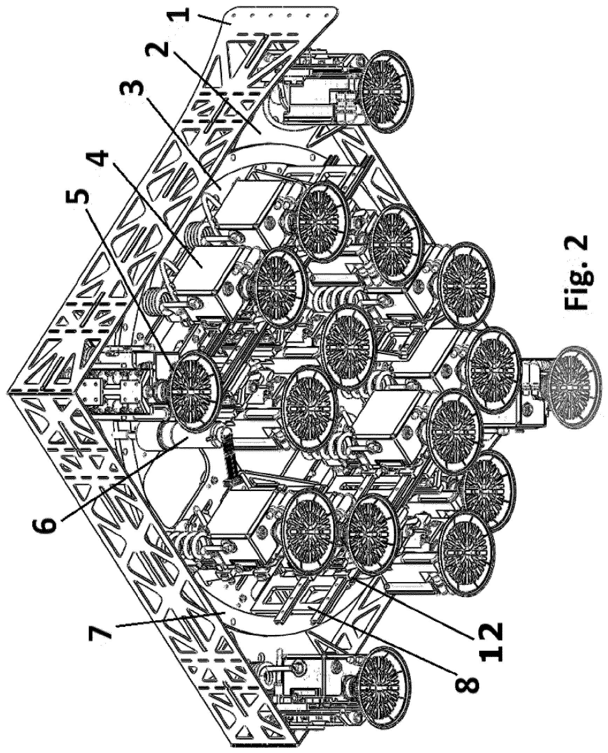

Fig. 2 zeigt den Reinigungsroboter von seiner Unterseite. Die Haftmodule 4 tragen auf ihrer Unterseite pneumatisch betätigte Sauger als Haftfüße 5. Alternativ können für die Haftfüße 5 kleine Elektromagnete vorgesehen sein, sofern der Roboter auf magnetisierbaren Oberflächen fährt.

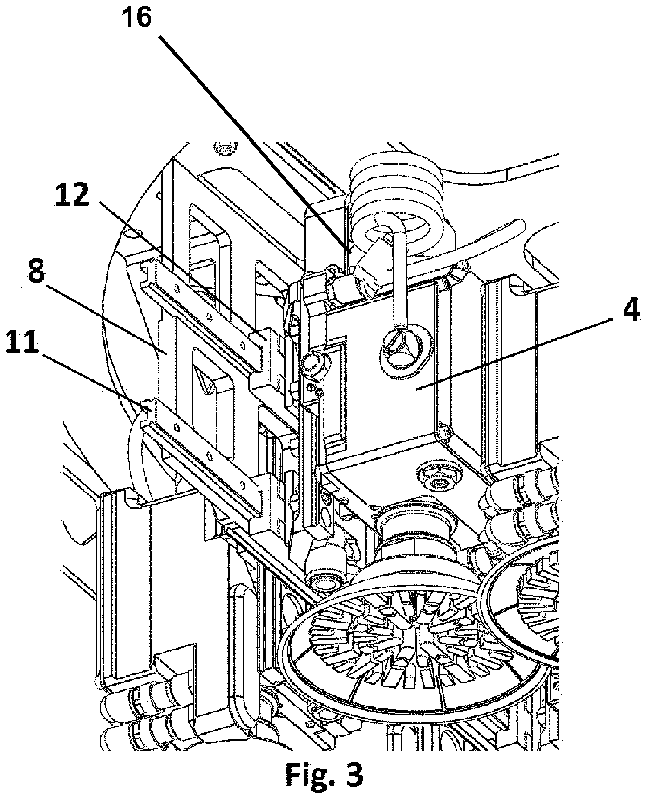

Aus Fig. 3 ist der prinzipielle Aufbau der Bahnführungen 8 für die Haftmodule 4 ersichtlich. Jede der Bahnführungen 8 besteht aus einem Paar Profilschienen 11, die vertikal beabstandet eine Führung bilden, welche die Haftmodule 4 tragen.

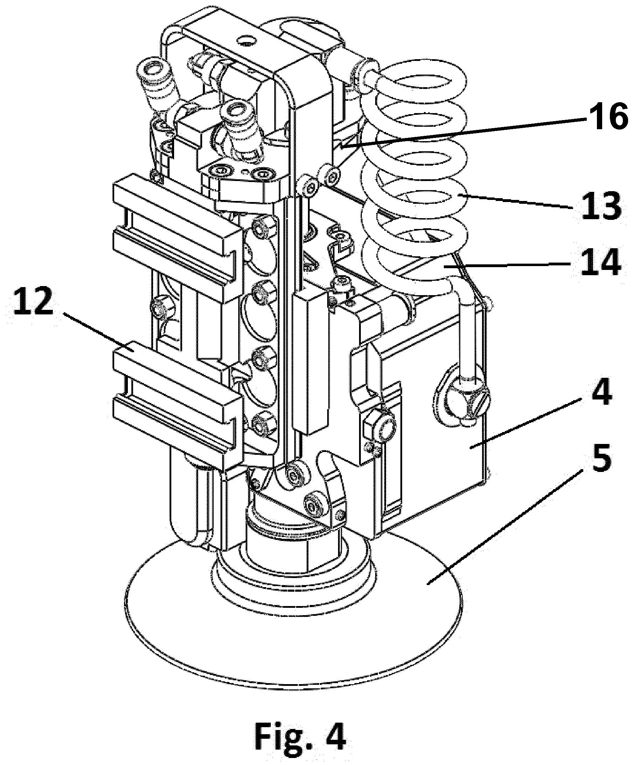

In Fig. 4 ist ein einzelnes Haftmodul 4 von seiner Innenseite her in perspektivischer Ansicht dargestellt. Die Führungen 12 greifen in die Profilschienen 11 der inneren Grundplatte 3 ein. Durch die von Elektromotoren 10 angetriebenen Spindeln 9 bewegen sich die Haftmodule 4 entlang den Profilschienen 11. Hierdurch wird ein stufenloser Fahrbetrieb umgesetzt.

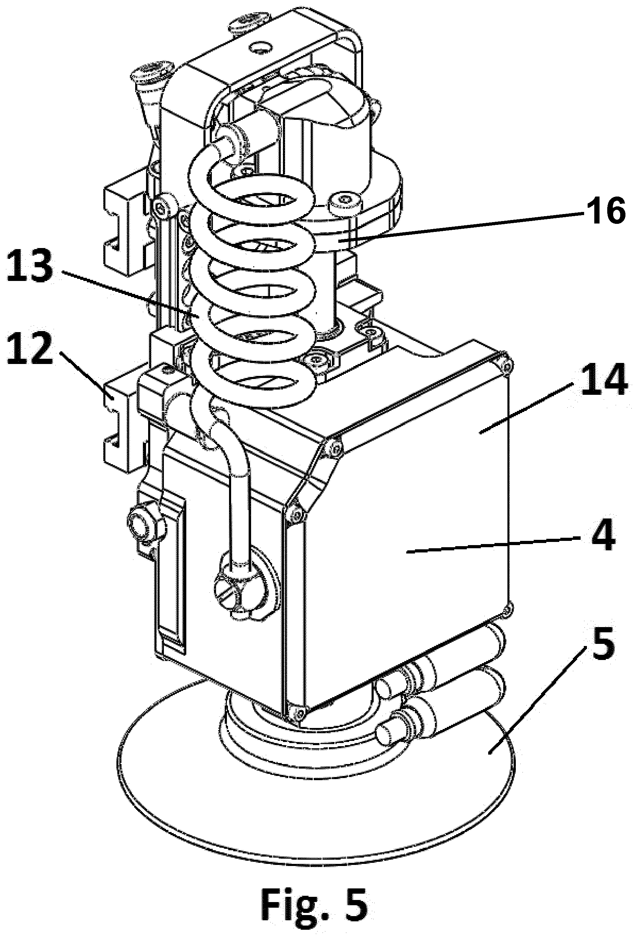

Fig. 5 zeigt das Haftmodul 4 von seiner Außenseite in perspektivischer Ansicht. Die innere Pneumatik 13 dient dem stufenlosen Absetzen und Abheben des Haftfußes 5 von der Fahrfläche. Weiterhin ist zu jedem Haftmodul 4 eine Elektronik 14 untergebracht, welche eine individuelle Ansteuerung jedes Haftmoduls 4 erlaubt, und zwar sowohl betreffend des Befahrens der Haftmodule 4 entlang der Laufbahnen 8 als auch bezüglich des Hebens und des Senkens der Haftfüße 5.

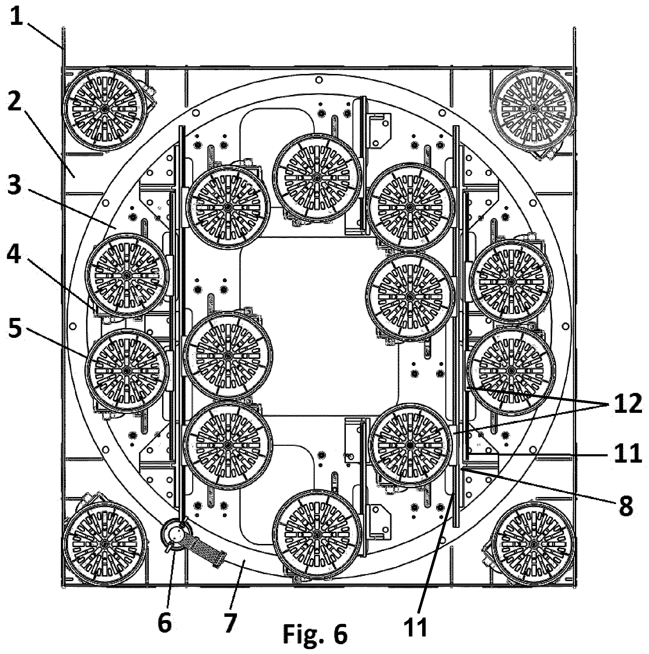

Fig. 6 zeigt eine Draufsicht des Reinigungsroboters auf seine Unterseite. Aus dieser Sicht sind besonders gut die Laufbahnen 8 mit den Profilschienen 11, von denen nur die untere Profilschiene zu sehen ist, erkennbar.

Im Beispiel laufen auf kombinierten Laufbahnführungen 8 insgesamt zwölf Haftmodule 4. Zusammen mit den vier auf der äußeren Grundplatte 2 fixierten Haftmodule 4 ergeben sich im Beispiel insgesamt 16 Haftfüße 5.

Die Figur 6 erläutert die Betriebsweisen, bei denen die Haftmodule 4 mittels einer intelligenten rechnergestützten Steuerung unterschiedlich zueinander beabstandet sind, wobei auch die Hübe der Haftfüße 5 voneinander verschieden sein können.

Durch ein schnelles zurückführen der nicht befestigten Haftmodule 4 sind zu jedem Zeitpunkt zumindest die Hälfte der oder mehr als die Hälfte der Haftfüße 5 angesogen.

Beim schrägen Überfahren von länglichen Hindernissen, wie Halteleisten, Abdeckleisten oder dergleichen ist es zweckmäßig, die Haftmodule 4 versetzt anzuordnen, entsprechend dem Schrägwinkel zum Hindernis, zwischen denjenigen Haftmodulen 4, die auf den parallelen Geradabschnitten laufen. Auf diese Weise können derartige Hindernisse problemlos, und ohne dass der Roboter aufsteigt, überwunden werden. Das Hindernis selbst erkennen am Roboter installierte Sensoren, wie Abstandstaster oder IR-Sensoren.

Das Fahrwerk 1 kann für vielerlei Arbeiten und bauliche Gegebenheiten eingesetzt werden. Ein bevorzugtes Anwendungsgebiet ist jedoch eine Modifikation als Reinigungsroboter für schräge und vertikale Glas- und Metallwände sowie schräge, gewölbte oder unbegehbare Dächer, wobei als Haftfüße 5 pneumatisch angesteuerte Sauger oder elektrisch angesteuerte Elektromagnete dienen können. Hierfür ist das Fahrwerk 1 fernsteuerbar ausgeführt und somit auch in Entfernung noch bedienbar.

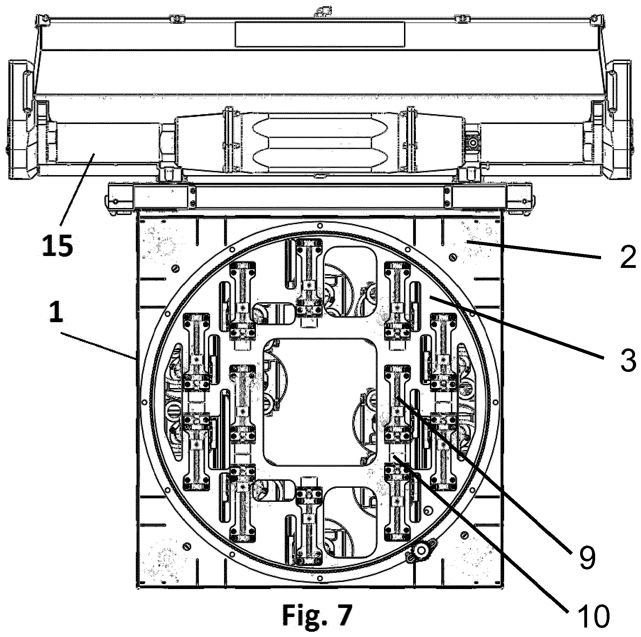

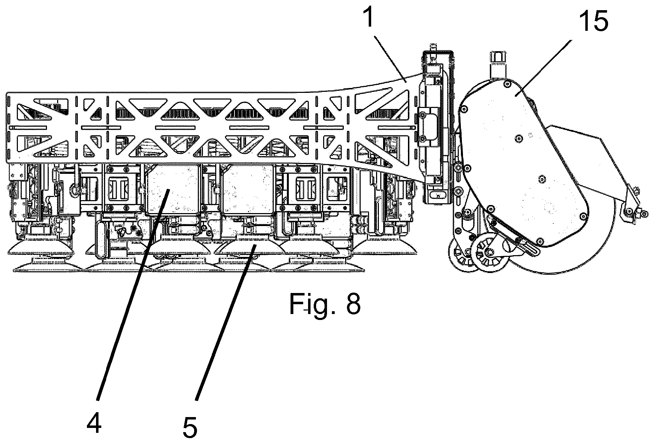

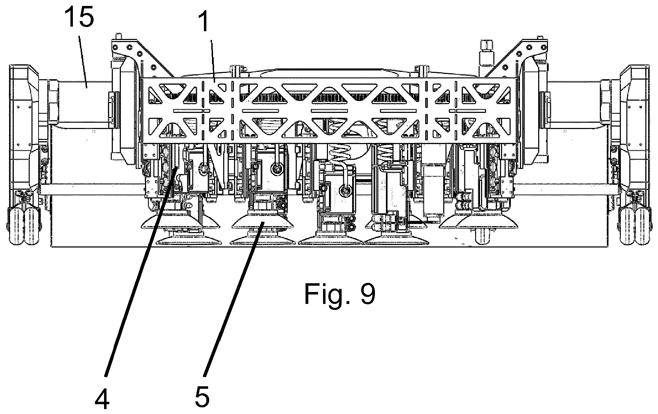

Ein Reinigungsroboter mit Bürste 15 ist in der Figur 7 bis 9 nochmals in der Draufsicht von oben, in der Seitenansicht und in der Stirnansicht auf das Fahrwerk 1 dargestellt.

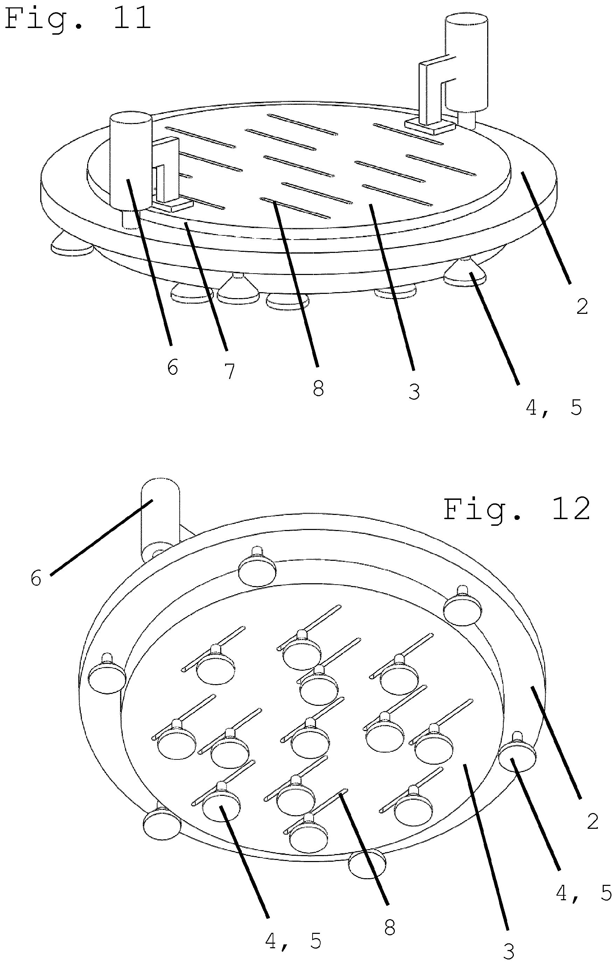

Die Figuren 11 und 12 zeigen eine schematische Anordnung von innerer Grundplatte 3 und äußerer Grundplatte 2, bei welcher beide Grundplatten 2, 3 rund sind und der Zahnkranz 7 mittels zwei Elektromotoren 7 angetrieben wird. Erkennbar ist, dass die Haftfüße 5 der Haftmodule 4 auf der inneren Grundplatte 3 in den gegebenen parallelen und zugleich seitlich unregelmäßig versetzt angeordneten Längsöffnungen als Laufbahnführungen 8 beweglich und als Linearantrieb 9 angeordnet sind.

Wie beschrieben, sind in den dargestellten Ausführungsbeispielen die Haftmodule 4 mit jeweils einem Hubantrieb 16 und einem Fahrantrieb 9 an der inneren Grundplatte 3 und die Haftmodule 4 mit nur einem Hubantrieb 16 an der äußeren Grundplatte 2 angeordnet.

Eine weitere alternative, nicht dargestellte Ausführungsform sieht vor, dass die hub- und fahrbaren Haftmodule 4 an der äußeren Grundplatte 2 und die nur hubbaren Haftmodule 4 an der inneren Grundplatte 3 angeordnet sind. Alle weiteren Merkmale der jeweiligen Haftmodule 4 einschließlich der Antriebe treffen hierbei jedoch weiterhin zu, da es nur ein anderer Ort der Anordnung der Haftmodule 4 ist und die jeweilige Funktion bei den Haftmodulen 4 liegt.

Ausgehend von dieser Anordnung der Haftmodule 4 mit den Haftfüßen 5 ergibt sich eine Betriebsweise entsprechend des erfindungsgemäßen Verfahrens, wonach für eine Linearbewegung als Fahrbetrieb des Fahrwerks 1 die Haftfüße 5 von hub- und fahrbaren Haftmodulen 4 von einem ersten Teil der Grundkonstruktion 1, im konkreten Ausführungsbeispiel der inneren Grundplatte 3, zunächst jeweils alle Haftfüße 5 auf der Fahrfläche haften und nach jeweils erfolgter Linearbewegung zeitlich und räumlich in Bewegungsrichtung und quer zu dieser versetzt, nach und nach in Gruppen abgehoben und entsprechend wieder abgesetzt werden, wobei die hub- und fahrbaren Haftmodule 4 der inneren Grundplatte 3 während der Zeit des Nichthaftens, also im abgehobenen Zustand, entgegen der Bewegungsrichtung des Fahrwerks 1 in eine Ausgangsstellung gefahren werden, um sofort wieder durch ein Absenken am Fahrbetrieb teilzunehmen.

Die hub- und fahrbaren Haftmodule 4 der inneren Grundplatte 3 vollziehen während des Fahrbetriebs eine Linearbewegung relativ zur Grundkonstruktion 1 und zum Fahrwerk 1, wobei für das Nachsetzen der Haftfüße 5 für eine kontinuierliche Bewegung oder ruckeln und Stocken, das Abheben, Absetzen und Haften der hub- und fahrbaren Haftmodule 4 gruppiert in zwei, drei oder mehr Gruppen zeitlich und räumlich versetzt erfolgt. Die hierbei gebildeten Gruppen von hub- und fahrbaren Haftmodulen 4 können ein, zwei und mehr Haftmodule 4 enthalten. Diese Anzahl richtet sich nach den örtlichen Gegebenheiten und am Bewegungsverlauf.

Für eine Schwenkbewegung zur Richtungsänderung werden die Haftfüße 5 von hub und/oder fahrbaren Haftmodulen 4, im konkreten Ausführungsbeispiel als hubbare Haftmodule 4 eingesetzt, eines zweiten Teils der Grundkonstruktion 1, im konkreten Ausführungsbeispiel als äußere Grundplatte 2, auf die Fahrfläche abgesetzt und haften dort. Danach erfolgt die Schwenkbewegung der Teile der Grundkonstruktion 1 relativ zueinander durch Ansteuerung des Elektromotors 6 zum Antreiben des Zahnkranzes 7. Nach erfolgter Schwenkbewegung werden die hub und/oder fahrbaren Haftmodule 4 zweiten Teils der Grundkonstruktion 1 wieder abgehoben. Während der Schwenkbewegung haften die Haftfüße 5 der hub- und fahrbaren Haftmodule 4 des ersten Teil der Grundkonstruktion 1 nicht auf der Fahrfläche. Nach der Schwenkbewegung übernehmen die Haftfüße 5 der hub- und fahrbaren Haftmodule 4 ersten Teil der Grundkonstruktion 1 wieder den Halt auf der Fahrfläche.

Während des Überganges von der Linearbewegung zur Schwenkbewegung und zurück von der Schwenkbewegung zu zur Linearbewegung haften kurzzeitig zumindest ein Teil der Haftfüße 5 der Haftmodule 4 beider Teile oder Grundplatten 2, 3 der Grundkonstruktion 1 auf der Fahrfläche.

Insbesondere die gruppierten hub- und fahrbaren Haftmodule 4 bewirken, dass trotz fließendem Bewegungsablauf zumindest die Hälfte aller Haftfüßen 5 auf der Fahrfläche haften. Nach der jeweiligen Linearbewegung als Fahrbetrieb kehren durch eine entgegengesetzte Linearbewegung die hub- und fahrbaren Haftmodule 4 mit abgehobenen Haftfüßen 5 in eine entsprechende Ausgangsstellung zurück. An der Ausgangsstellung angelangt, erfolgt ein Absetzen der Haftfüße 5 auf die Fahrfläche für einen erneuten Fahrbetrieb. Somit ergibt sich ein kontinuierlicher und fließender Fahrbetrieb, welcher zudem den Hubbetrieb mit einschließt.

Die für diesen kontinuierlichen Fahrbetrieb gebildeten Gruppen sind dynamisch und werden bedarfsweise gebildet. Dabei unterscheiden sich die Anzahl der Gruppen und die Anzahl und Zuordnung der hub- und fahrbaren Haftmodule 4 in und zu den Gruppen. Zudem variiert bedarfsgerecht und anpassbar die Ansteuerung der hub- und fahrbaren Haftmodule 4 für die Linearbewegung hinsichtlich der Geschwindigkeit der Linearbewegung für einen ausgeglichenen und ausgewogenen Fahrbetrieb.

Ausgehend vom beschriebenen ergibt sich ein weiteres Ausführungsbeispiel. So ist es, in einem weiteren, nicht dargestellten Ausführungsbeispiel vorgesehen, dass sowohl an der inneren Grundplatte 3 als auch an der äußeren Grundplatte 2 Haftmodule 4 jeweils einem Hubantrieb 16 und einem Fahrantrieb 9 angeordnet sind. Die sich hieraus ergebenden Vorteile bestehen darin, dass für eine Richtungsänderung einerseits die Grundplatten 2, 3 in beschriebener Weise zueinander verdreht werden, anderseits in geeigneter Stellung der Grundplatten 2, 3 zueinander die Linearantriebe 9 so umgeschalten werden, dass das Fahrwerk 1 in einen anderen seitlich oder schräg versetzten Bereich auf der Fahrfläche verfahren wird. Weiterhin ermöglicht die beschriebenen Anordnung, dass bereits während der Fahrbewegung beispielsweise mittels des Fahrantriebs 9 der hub- und fahrbaren Haftmodule 4 der äußeren Grundplatte 2 die innere Grundplatte 3 bereits mittels des pneumatischen Motors 6 und des Zahnkranzes 6 in die gewünschte Richtung und Lage gedreht wird, um zu gegebener Zeit und Stelle unmittelbar in die gewünschte Richtung das Fahrwerk 1 fahren zu können. Die Umschaltung zwischen Grundplatten 2, 3 sowie die jeweilige Lageanpassung können hierbei stetig abwechselnd wiederholt werden, sofern eine entsprechende Richtungsänderung dies erforderlich macht.

Auch ist es für die Lagesicherheit und Standsicherheit gegebenenfalls erforderlich, dass im Umschaltmoment der Haftmodule 4 zwischen den Grundplatten 2, 3 zumindest ein Teil der Haftmodule 4 beider Grundplatten 2, 3 kurzzeitig an der Fahrfläche haften.

Auch in diesem Fall erfolgt die Gruppenbildung zwischen den Haftmodulen 4 und ist eine kontinuierliche Fahrweise möglich. Darüber hinaus finden hierbei die weiteren beschrieben Vorteile entsprechende Anwendung.

### Zusammenstellung der Bezugszeichen

- 1: - Fahrwerk eines Roboters, Grundkonstruktion
- 2: - äußere Grundplatte
- 3: - innere Grundplatte
- 4: - Haftmodule
- 5: - Haftfuß
- 6: - Elektromotor für Zahnkranz, Antrieb
- 7: - Zahnkranz
- 8: - Laufbahnen für Haftmodule, Laufbahnführungen
- 9: - Spindel, Linearantrieb, Fahrantrieb
- 10: - Elektromotor für Spindel
- 11: - Führungsschiene, Profilschienen
- 12: - Führungen am Fuß
- 13: - Pneumatik im Fuß
- 14: - Elektronik zum Fuß
- 15: - Reinigungsbürste
- 16: - Hubantrieb

## Patentansprüche

1. Fahrwerk (1) für einen Roboter, Manipulator, ein Fahrflächen-Reinigungsgerät und/oder Überwachungsvorrichtungen zum Befahren von für mittels eines Vakuums oder elektromagnetischer Kraft beaufschlagbarer Haftmodule (4) geeigneten Flächen mit stets zur Fahrfläche weisenden und bezüglich der Fahrfläche abheb- und absetzbaren Haftfüßen (5), wobei die Haftmodule (4) an einer zumindest zweiteiligen Grundkonstruktion (1) angeordnet sind und dass eine Linearbewegung und eine Schwenkbewegung relativ zur Fahrfläche möglich ist,
wobei die Grundkonstruktion (1) aus zumindest zwei Grundplatten (2, 3) besteht, wobei die Grundplatten (2, 3) relativ zueinander motorisch angetrieben, verdrehbar ausgeführt sind und die Haftmodule (4) an den Grundplatten (2, 3) angeordnet sind, **dadurch gekennzeichnet, dass** die einzelnen Haftmodule (4) jeweils eigene steuerbare Fahrantriebe (9) und Hubantriebe (16) besitzen.

2. Fahrwerk nach Anspruch 1,
**dadurch gekennzeichnet,**
**dass** die Grundplatten (2, 3) als innere Grundplatte (3) und als äußere Grundplatte (2) ausgeführt sind, wobei die Haftmodule (4) an der inneren Grundplatte (3) und der äußeren Grundplatte (2) jeweils eigene steuerbare Hubantriebe (16) und Fahrantriebe (9) besitzen.

3. Fahrwerk nach einem der vorstehenden Ansprüche 1 und 2,
**dadurch gekennzeichnet,**
**dass** der Fahrantrieb (9) der Haftmodule (4) ein Linearantrieb (9) ist.

4. Fahrwerk nach einem der vorstehenden Ansprüche,
**dadurch gekennzeichnet,**
**dass** die jeweils hub- und fahrbaren Haftmodule (4) einen von einem moduleigenen Elektromotor (9) antreibbaren kombinierten Hubantrieb (16) und Fahrantrieb (9) aufweisen.

5. Fahrwerk nach einem der vorstehenden Ansprüche,
**dadurch gekennzeichnet,**
**dass** die Umschaltung von Hubbetrieb auf Fahrbetrieb für jedes einzelne jeweils hub- und fahrbare Haftmodul (4) automatisch steuerbar ausgeführt ist.

6. Fahrwerk nach einem der vorstehenden Ansprüche,
**dadurch gekennzeichnet,**
**dass** jeweils der Hubbetrieb und/oder Fahrbetrieb stufenlos ausgeführt ist.

7. Fahrwerk nach einem der vorstehenden Ansprüche,
**dadurch gekennzeichnet,**
**dass** für den Fahrbetrieb die jeweils hub- und fahrbaren Haftmodule (4) auf der jeweiligen Grundplatte (2, 3) an parallel zueinander und seitlich dazu regelmäßig und/oder unregelmäßig versetzt und/oder in Längsrichtung wiederholend nacheinander angeordneten Laufbahnführungen (8) angeordnet sind.

8. Fahrwerk nach Anspruch 7,
**dadurch gekennzeichnet,**
**dass** die Laufbahnführungen (8) Führungsschienen (11) umfassen.

9. Fahrwerk nach einem der vorstehenden Ansprüche,
**dadurch gekennzeichnet,**
**dass** das Fahrwerk (1) fernsteuerbar ausgeführt ist.

10. Verfahren zum Betreiben des Fahrwerks (1) für einen Roboter, Manipulator, ein Fahrflächen-Reinigungsgerät und/oder Überwachungsvorrichtungen zum Befahren von für mittels eines Vakuums oder elektromagnetischer Kraft beaufschlagbarer Haftmodule (4) geeigneten Flächen mit stets zur Fahrfläche weisenden und bezüglich der Fahrfläche abheb- und absetzbaren Haftfüßen (5), wobei die Haftmodule (4) an einer zumindest zweiteiligen Grundkonstruktion (1) angeordnet sind und dass eine Linearbewegung und eine Schwenkbewegung relativ zur Fahrfläche möglich ist,
**dadurch gekennzeichnet,**
- **dass** für eine Linearbewegung als Fahrbetrieb des Fahrwerks (1) Haftfüße (5) von hub- und fahrbaren Haftmodulen (4) von einem ersten Teil der Grundkonstruktion (1) jeweils auf der Fahrfläche haften und nach jeweils erfolgter Linearbewegung abgehoben und wieder abgesetzt werden und dass eine Linearbewegung der hub- und fahrbaren Haftmodule (4) relativ zur Grundkonstruktion (1) und zum Fahrwerk (1) erfolgt, wobei das Abheben, Absetzen und Haften der hub- und fahrbaren Haftmodule (4) gruppiert in zwei, drei oder mehr Gruppen zeitlich und räumlich versetzt erfolgt, wobei die Anzahl der Gruppen und die Anzahl und Zuordnung der hub- und fahrbaren Haftmodule (4) in und zu den Gruppen variabel und individuell erfolgt und
- **dass** für eine Schwenkbewegung zur Richtungsänderung Haftfüße (5) von hub- und/oder fahrbaren Haftmodulen (4) eines weiteren Teils der Grundkonstruktion (1) auf die Fahrfläche abgesetzt werden und haften und die Schwenkbewegung der Teile der Grundkonstruktion (1) relativ zueinander erfolgt und danach die hub- und/oder fahrbaren Haftmodule (4) des weiteren Teils der Grundkonstruktion (1) wieder abgehoben werden, wobei während der Schwenkbewegung die Haftfüße (5) der hub- und fahrbaren Haftmodule (4) des ersten Teils der Grundkonstruktion (1) nicht auf der Fahrfläche haften und nach der Schwenkbewegung die Haftfüße (5) der hub- und fahrbaren Haftmodule (4) des ersten Teils der Grundkonstruktion (1) wieder auf der Fahrfläche haften.

11. Verfahren nach Anspruch 10,
**dadurch gekennzeichnet,**
**dass** vor, während oder nach der Schwenkbewegung der Grundplatten (2, 3) zur Richtungsänderung eine Linearbewegung des Fahrwerks 1 durch die hub- und/oder fahrbaren Haftmodule (4) des weiteren Teils der Grundkonstruktion (1) erfolgt.

12. Verfahren nach einem der Ansprüche 10 und 11,
**dadurch gekennzeichnet,**
**dass** beim Übergang von Linearbewegung zu Schwenkbewegung und von Schwenkbewegung zu Linearbewegung kurzzeitig zumindest ein Teil der Haftfüße (5) der Haftmodule (4) beider Teile der Grundkonstruktion (1) auf der Fahrfläche haften.

13. Verfahren nach einem der Ansprüche 10 bis 12,
**dadurch gekennzeichnet,**
**dass** die Drehbewegung der Teile der Grundkonstruktion (1) mittels eines elektromotorischen oder pneumatischen Antriebes (6) erfolgt.

14. Verfahren nach einem der Ansprüche 10 bis 13,
**dadurch gekennzeichnet,**
**dass** die gruppierten hub- und fahrbaren Haftmodule (4) nach der jeweiligen Linearbewegung als Fahrbetrieb mit abgehobenen Haftfüßen (5) in eine entsprechende Ausgangsstellung zurückgefahren werden und an der Ausgangsstellung ein Absetzen der Haftfüße (5) auf die Fahrfläche für einen erneuten Fahrbetrieb erfolgt.

15. Verfahren nach einem der Ansprüche 10 bis 14,
**dadurch gekennzeichnet,**
**dass** der Hubbetrieb und/oder Fahrbetrieb kontinuierlich und fließend erfolgt.

16. Verfahren nach einem der Ansprüche 10 bis 16,
**dadurch gekennzeichnet,**
**dass** die Ansteuerung der hub- und fahrbaren Haftmodule (4) für die Linearbewegung individuell erfolgt.

## Claims

1. Undercarriage (1) for a robot, manipulator, a driving surface cleaning device and/or monitoring devices for driving over surfaces suitable for suction modules (4) which can be acted upon by means of a vacuum or electromagnetic force, having suction feet (5) which always point towards the driving surface and can be lifted off and lowered with respect to the driving surface, the suction modules (4) being arranged on an at least two-part base construction (1), and a linear movement and a pivoting movement relative to the driving surface being possible wherein the base construction (1) consists of at least two base plates (2, 3), wherein the base plates (2, 3) are motor-driven relative to one another, are rotatable and the suction modules (4) are arranged on the base plates (2, 3),
**characterised in that**
the individual suction modules (4) each have their own controllable travel drives (9) and lifting drives (16).

2. Undercarriage according to claim 1,
**characterised in that**
the base plates (2, 3) are designed as an inner base plate (3) and as an outer base plate (2), the suction modules (4) on the inner base plate (3) and the outer base plate (2) each having their own controllable lifting drives (16) and travel drives (9) .

3. Undercarriage according to one of the claims 1 and 2,
**characterised in that**
the travel drive (9) of the suction modules (4) is a linear drive (9).

4. Undercarriage according to one of the above claims,
**characterised in that**
the respective lifting and travelling suction modules (4) comprise a combined lifting drive (16) and travelling drive (9) which can be driven by a module-like electric motor (9).

5. Undercarriage according to one of the above claims,
**characterised in that**
the switchover from lifting operation to travelling operation is carried out in an automatically controllable manner for each individual respective lifting and travelling suction module (4).

6. Undercarriage according to one of the above claims,
**characterised in that**
the lifting operation and/or travelling operation is in each case continuously adjustable.

7. Undercarriage according to one of the above claims,
**characterised in that**
for travelling operation, the respective lifting and travelling suction modules (4) are arranged on the respective base plate (2, 3) on track guides (8) which are arranged parallel to one another and laterally thereto in a regularly and/or irregularly offset manner and/or in a repetitive manner one after the other in the longitudinal direction.

8. Undercarriage according to claim 7,
**characterised in that**
the track guides (8) comprise guide rails (11).

9. Undercarriage according to one of the above claims,
**characterised in that**
the undercarriage (1) can be remotely controlled.

10. Method for operating the undercarriage (1) for a robot, manipulator, a travelling surface cleaning device and/or monitoring devices for travelling over surfaces suitable for suction modules (4) which can be acted upon by means of a vacuum or electromagnetic force, with suction feet (5) which always point towards the travelling surface and can be raised and lowered relative to the travelling surface, wherein the suction modules (4) are arranged on an at least two-part base construction (1) and that a linear movement and a pivoting movement relative to the travelling surface is possible,
**characterised in that**
- for a linear movement as a travelling operation of the undercarriage (1), suction feet (5) of lifting and travelling suction modules (4) adhere to a first part of the base construction (1) in each case on the travelling surface and are lifted off and set down again after a respective linear movement has taken place, and **in that** a linear movement of the lifting and travelling suction modules (4) takes place relative to the base construction (1) and to the undercarriage (1), wherein the lifting, setting down and adhering of the lifting and mobile suction modules (4) takes place in groups of two, three or more groups with a temporal and spatial offset, wherein the number of groups and the number and allocation of the lifting and mobile suction modules (4) in and to the groups takes place variably and individually, and
- **in that**, for a pivoting movement for changing the direction, suction feet (5) of liftable and/or mobile suction modules (4) of a further part of the basic structure (1) are set down on the driving surface and adhere, and the pivoting movement of the parts of the basic structure (1) relative to one another takes place and then the liftable and/or mobile suction modules (4) of the further part of the basic structure (1) are lifted off again, wherein during the pivoting movement the suction feet (5) of the liftable and mobile suction modules (4) of the first part of the basic construction (1) do not adhere to the driving surface and after the pivoting movement the suction feet (5) of the liftable and mobile suction modules (4) of the first part of the basic construction (1) adhere to the driving surface again.

11. Method according to claim 10,
**characterised in that**
before, during or after the pivoting movement of the base plates (2, 3) for changing the direction, a linear movement of the undercarriage 1 is effected by the liftable and/or movable suction modules (4) of the further part of the base structure (1) .

12. Method according to any one of claims 10 and 11,
**characterised in that**,
during the transition from linear movement to pivoting movement and from pivoting movement to linear movement, at least some of the suction feet (5) of the suction modules (4) of both parts of the base structure (1) adhere briefly to the driving surface.

13. Method according to any one of claims 10 to 12,
**characterised in that**
the rotary movement of the parts of the basic structure (1) is effected by means of an electric motor or pneumatic drive (6).

14. Method according to one of the claims 10 to 13,
**characterised in that**
the grouped liftable and movable suction modules (4) are returned to a corresponding starting position after the respective linear movement as a travelling operation with the suction feet (5) lifted off and, at the starting position, the suction feet (5) are set down on the driving surface for a renewed driving operation.

15. The method according to any one of claims 10 to 14,
**characterised in that**
the lifting operation and/or driving operation is continuous and flowing.

16. Method according to any one of claims 10 to 16,
**characterised in that**
the control of the liftable and movable adhesive modules (4) for the linear movement is performed individually.

## Revendications

1. Mécanisme de roulement (1) pour un robot, un manipulateur, un appareil de nettoyage de surfaces de roulement et/ou des dispositifs de surveillance pour le déplacement sur des surfaces convenant à des modules adhérents (4) pouvant être sollicités par un vide ou une force électromagnétique, avec des pieds adhésifs (5) toujours orientés vers la surface de roulement et pouvant être levés et abaissés par rapport à la surface de roulement, les modules adhérents (4) étant disposés sur une construction de base (1) en au moins deux parties, un mouvement linéaire et un mouvement de pivotement étant possibles par rapport à la surface de roulement,
la construction de base (1) étant
constituée d'au moins deux plaques de base (2, 3), les plaques de base (2, 3) étant entraînées par moteur l'une par rapport à l'autre et pouvant tourner, et les modules adhérents (4) étant disposés sur les plaques de base (2, 3),
**caractérisé en ce que**
les différents modules adhérents (4) possèdent chacun leurs propres entraînements de roulement (9) et de levage (16) contrôlables.

2. Mécanisme de roulement selon la revendication 1,
**caractérisé en ce que**
les plaques de base (2, 3) sont exécutées sous forme de plaque de base intérieure (3) et de plaque de base extérieure (2), les modules adhérents (4) sur la plaque de base intérieure (3) et la plaque de base extérieure (2) possèdent chacun leurs propres entraînements de levage (16) et de roulement (9) contrôlables.

3. Mécanisme de roulement selon l'une des revendications précédentes 1 et 2,
**caractérisé en ce que**
l'entraînement de roulement (9) des modules adhérents (4) est un entraînement linéaire (9).

4. Mécanisme de roulement selon l'une des revendications précédentes,
**caractérisé en ce que**
chaque module adhérent de levage et de roulement (4) présente un entraînement de levage (16) et un entraînement de roulement (9) combiné pouvant être commandé par un moteur électrique (9) propre au module.

5. Mécanisme de roulement selon l'une des revendications précédentes,
**caractérisé en ce que**
la commutation entre le mode de levage et le mode de roulement pour chaque module adhérent de levage et de roulement (4) individuel est exécutée de manière automatique et contrôlable.

6. Mécanisme de roulement selon l'une des revendications précédentes,
**caractérisé en ce que**
chaque mode de levage et/ou de roulement est réalisé en continu.

7. Mécanisme de roulement selon l'une des revendications précédentes,
**caractérisé en ce que**
pour le mode de roulement, les modules adhérents de levage et de roulement(4) respectifs sont disposés sur la plaque de base (2, 3) respective sur des guides de bande de roulement (8) disposés parallèlement les uns par rapport aux autres et latéralement de manière régulièrement et/ou irrégulièrement décalée et/ou de manière répétitive les uns après les autres dans la direction longitudinale.

8. Mécanisme de roulement selon la revendication 7,
**caractérisé en ce que**
les guides de bande de roulement (8) comprennent des rails de guidage (11).

9. Mécanisme de roulement selon l'une des revendications précédentes,
**caractérisé en ce que**
le mécanisme de roulement peut être télécommandé.

10. Procédé pour le fonctionnement du mécanisme de roulement (1) d'un robot, d'un manipulateur, d'un appareil de nettoyage de surfaces de roulement et/ou de dispositifs de surveillance pour le déplacement sur des surfaces convenant à des modules adhérents (4) pouvant être sollicités par un vide ou une force électromagnétique, avec des pieds adhésifs (5) toujours orientés vers la surface de roulement et pouvant être relevés et abaissés par rapport à la surface de roulement, les modules adhérents (4) étant disposés sur une construction de base (1) en au moins deux parties, et un mouvement linéaire et un mouvement de pivotement étant possibles par rapport à la surface de roulement,
**caractérisé en ce que,**
- pour un mouvement linéaire en tant que mode de roulement du mécanisme de roulement (1), des pieds adhésifs (5) de modules adhérents de levage et de roulement (4) d'une première partie de la construction de base (1) adhèrent respectivement à la surface de déplacement et sont soulevés et reposés après un mouvement linéaire respectif, et **en ce qu'**un mouvement linéaire des modules adhérents de levage et de roulement (4) a lieu par rapport à la construction de base (1) et au mécanisme de roulement (1), sachant que le levage, la pose et l'adhésion des modules adhérents de levage et de roulement (4) ont lieu par groupes de deux, de trois ou de plusieurs avec un décalage temporel et spatial, sachant que le nombre de groupes et le nombre et l'attribution des modules adhésif de levage et de roulement (4) au sein des et aux groupes ont lieu de manière variable et individuelle
- pour un mouvement de pivotement destiné à changer de direction, des pieds adhésifs (5) de modules adhérents de levage et de roulement (4) d'une autre partie de la construction de base (1) sont placés sur la surface de roulement et adhèrent, et le mouvement de pivotement des parties de la construction de base (1) les unes par rapport aux autres a lieu, puis les modules adhérents de levage et de roulement (4) de l'autre partie de la construction de base (1) sont à nouveau soulevés, sachant que, pendant le mouvement de pivotement, les pieds adhésifs (5) des modules adhérents de levage et de roulement (4) de la première partie de la structure de base (1) n'adhèrent pas à la surface de roulement et, après le mouvement de pivotement, les pieds adhésifs (5) des modules adhérents de levage et de roulement (4) de la première partie de la structure de base (1) adhèrent à nouveau à la surface de roulement.

11. Procédé selon la revendication 10,
**caractérisé en ce qu'**avant,
pendant ou après le mouvement de pivotement des plaques de base (2, 3) pour le changement de direction, un mouvement linéaire du mécanisme de roulement 1 est effectué par les modules adhérents de levage et d'entraînement (4) de l'autre partie de la structure de base (1).

12. Procédé selon l'une des revendications 10 et 11,
**caractérisé en ce que**
pendant la transition du mouvement linéaire au mouvement de pivotement et du mouvement de pivotement au mouvement linéaire, au moins une partie des pieds adhésifs (5) des modules adhérents (4) des deux parties de la construction de base (1) adhèrent brièvement à la surface de roulement.

13. Procédé selon l'une des revendications 10 à 12,
**caractérisé en ce que**
le mouvement rotatif des parties de la construction de base (1) est effectué au moyen d'un moteur électrique ou d'un entraînement pneumatique (6).

14. Procédé selon l'une des revendications 10 à 13,
**caractérisé en ce que**
les modules adhérents de levage et de roulement (4) groupés sont ramenés dans une position de départ correspondante après le mouvement linéaire respectif en tant que mode de roulement avec les pieds adhésifs (5) levés, et les pieds adhésifs (5) sont déposés sur la surface de roulement dans la position de départ pour un nouveau mode de roulement.

15. Procédé selon l'une des revendications 10 à 14,
**caractérisé en ce que**
le mode de levage et/ou de roulement s'effectue en toute continuité et en toute fluidité.

16. Procédé selon l'une des revendications 10 à 16,
**caractérisé en ce que**
le mode de levage et/ou de roulement a lieu de manière linéaire et individuelle.
